# EUROPÄISCHE PATENTSCHRIFT

(11) **EP 1 658 731 B1**
(45) Veröffentlichungstag und Bekanntmachung des Hinweises auf die Patenterteilung: **27.02.2008**
(21) Anmeldenummer: 04700665.5
(22) Anmeldetag: 08.01.2004
(51) Int. Cl.: H04N 13/00

(54) **AUTOSTEREOSKOPISCHES MULTI-USER-DISPLAY**
AUTOSTEREOSCOPIC MULTI-USER DISPLAY
ECRAN MULTI-UTILISATEURS AUTOSTEREOSCOPIQUE

(30) Priorität: 26.08.2003 DE 10339076
(43) Veröffentlichungstag der Anmeldung: 24.05.2006
(73) Patentinhaber: SeeReal Technologies GmbH, 01307 Dresden (DE)
(72) Erfinder: SCHWERDTNER, Armin, 01259 Dresden (DE); SCHWERDTNER, Alexander, 01259 Dresden (DE); KRØLL, Bo, London W 148 AA (GB)
(86) Internationale Anmeldenummer: PCT/DE2004/000010
(87) Internationale Veröffentlichungsnummer: WO 2005/027534

(56) Entgegenhaltungen:
- EP-A- 0 827 350
- EP-A- 0 828 350
- GB-A- 2 296 152
- PATENT ABSTRACTS OF JAPAN Bd. 2000, Nr. 01, 31. Januar 2000 (2000-01-31) -& JP 11 289558 A (TOSHIBA CORP), 19. Oktober 1999 (1999-10-19)
- TOYOOKA K ET AL: "13.2: The 3D Display Using Field-Sequential LCD with Light Direction Controlling Back-light" SID 01 DIGEST, Bd. XXXII, 2001, - 2001 Seiten 174-177, XP007007639 ISSN: 0001-0966X
- PATENT ABSTRACTS OF JAPAN Bd. 1998, Nr. 11, 30. September 1998 (1998-09-30) -& JP 10 161061 A (SANYO ELECTRIC CO LTD), 19. Juni 1998 (1998-06-19)
- PATENT ABSTRACTS OF JAPAN Bd. 2000, Nr. 19, 5. Juni 2001 (2001-06-05) & JP 2001 056212 A (SANYO ELECTRIC CO LTD), 27. Februar 2001 (2001-02-27)
- PATENT ABSTRACTS OF JAPAN Bd. 2000, Nr. 10, 17. November 2000 (2000-11-17) & JP 2000 197075 A (SANYO ELECTRIC CO LTD), 14. Juli 2000 (2000-07-14)

## Beschreibung

Die Erfindung betrifft ein autostereoskopisches Multi-User-Display, bestehend aus einem Fokussierungselement zur Fokussierung von homogenem Licht zu Lichtbündeln auf die Augen eines oder mehrerer Betrachter und einem schaltbaren Display zur zeitsequentiellen Darstellung von zweidimensionalen Bildern oder Bildfolgen mit monoskopischen oder stereoskopischen Bildinhalten, das das Licht des Fokussierungselements mit diesen Bildinhalten moduliert.

Um den zukünftigen Erfordernissen des Marktes zu entsprechen, müssen autostereoskopische Multi-User-Displays die hohen Qualitätsmerkmale heutiger 2D-Displays erfüllen. Von den Nutzern dieser 3D-Displays werden als wesentliche Merkmale Multi-User-Fähigkeit, freie und unabhängige Beweglichkeit der Betrachter sowie der wahlfreie Zugriff auf mehrere Darstellungen bzw. Programme im 2D- und 3D-Modus erwartet. Von den 2D-Displays leiten sich weiter die Anforderungen hohe Auflösung, Robustheit, Zuverlässigkeit, geringe Bautiefe, Unterstützung praktisch aller gängigen Video-Formate, einschliesslich Kamera und Stereo-Kamera, sowie niedrige Kosten ab.

Als Multi-User-Displays werden Geräte bezeichnet, bei denen mehrere Betrachter an wahlfreien Orten gleichzeitig und unabhängig voneinander 3D-Inhalte sehen können. Das kann durch räumliche oder zeitliche Verschachtelung der Teilbilder erreicht werden.

Unter Verwendung dieser Verschachtelungssysteme sind verschiedene Lösungen für autostereoskopische Displays bekannt geworden.

Bei den Displays mit räumlicher Verschachtelung (Multi-View-Displays) sind mehrere benachbarte Pixel oder deren Farbsubpixel zu Pixelgruppen zusamrnengefasst, wobei jedes Pixel eine 3D-Szene aus einem anderen Betrachtungswinkel enthält (US 6 366 281, DE 101 45 133). Eine Bildtrennungsmaske, als Barriere, Lentikular oder anderes optisches Element bekannt, fokussiert die Pixelinhalte jeder Pixelgruppe fächerförmig in den Raum. Zu jedem Fächer gehört der Bildinhalt der 3D-Szene aus einem bestimmten Betrachtungswinkel. Liegen beide Augen eines Betrachters in benachbarten Fächern, nimmt der Betrachter den beabsichtigten stereoskopischen Eindruck wahr.

Wesentlicher Nachteil ist hier die reduzierte Auflösung. Sie ist nicht mehr durch die Pixelauflösung der Bild-Matrix, sondern durch die gröbere Auflösung nach Pixelgruppen gegeben. Beispielsweise reduziert ein Bild mit acht Ansichten die Auflösung auf 1/8.

Ein weiterer Nachteil ist, dass ein vorgegebener Betrachterabstand vom Multi-View-Display eingehalten werden muss, wenn Übersprechen mit pseudoskopischen Effekten vermieden werden soll.

Bekannt ist ein autostereoskopisches Display mit zeitlicher Verschachtelung (Neil A. Dodgson u.a.: A 50" time-multiplexed autstereoscopic display, Proc.SPIE 3957, "Stereoscopic Displays & Applications XI"). Dabei werden nebeneinander angeordnete Lichtquellen mittels einer Fresnel-Linse in die Betrachterebene in Form einer Lichtbox abgebildet. In der Nähe der Fresnel-Linse befindet sich ein LCD in Transmission, das das Licht mit der Information moduliert. Die Lichtquellen und damit die Lichtbox werden nacheinander durchgeschaltet, wobei gleichzeitig das LCD den Bildinhalt darstellt, der der Aufnahme einer 3D-Szene aus der entsprechenden Richtung entspricht. Ein Betrachter sieht von der Lichtbox aus mit beiden Augen die Szene aus unterschiedlichen Richtungen auf dem LCD. Da sie verschiedene Richtungen derselben Szene wiedergeben, sieht der Betrachter stereo. Dies gilt auch für mehrere Betrachter. Das Verfahren kann als time-multiplexed Multi-View bezeichnet werden, da die verschiedenen Sichten der Szene nicht gleichzeitig, sondern zeitlich nacheinander dargestellt werden. Gegenüber dem üblichen Multi-View-Verfahren behält es die hohe Auflösung des Displays bei.

Nachteilig bei allen zeitverschachtelten Verfahren sind die hohe Datenrate und die hohe Bildwiederholrate. Bei 10 Positionen in der Lichtbox verzehnfacht sie sich. Damit scheiden die meisten heutigen TFT-basierten Transmissions-Displays für zukünftige autostereoskopische Multi-User-Displays aus.

In einer Variante dieser Darstellungsart wird die Information eines CRT durch einen Shutter hindurch auf eine Fresnel-Linse abgebildet. Diese bildet wiederum den Shutter in die Lichtbox ab. Hierbei vereint das CRT gleichzeitig zwei Funktionen: es ist Informationsträger und Lichtquelle.

Die hohe Bildwiederholrate wird hier vom CRT übernommen, da keine Durchlicht-Modulation benötigt wird. CRT-Monitore sind wesentlich schneller als die meisten TFT-Monitore. Trotzdem sind wenigstens 10 Ansichten für ein Multi-View-Verfahren wünschenswert. Damit stehen selbst schnelle CRT-Monitore mit hoher Auflösung vor dem Problem der hohen Datenrate. Besonders erschwerend bei der Bilddarstellung ist die erforderliche höhere Bildintensität, in unserem Beispiel verzehnfacht sie sich. Für ein bequemes Betrachten ohne Sprünge, verursacht durch Übergänge in andere Segmente in der Lichtbox, sind mehr als 10 Ansichten erforderlich. CRT-Monitore mit so kurzen Schaltzeiten stossen selbst als Spezialanfertigungen an technologische und wirtschaftliche Grenzen. Zudem sind derartige Geräte voluminös, wodurch die Marktakzeptanz verringert wird.

Multi-View-Geräte erfordern für allgemeines Live-Video entsprechende Multi-View-Kameras, die nur als Spezialentwicklungen existieren. Der Einsatz von Multi-View-Geräten im Fernseh-Bereich wird dadurch sowie durch die hohe Datenrate behindert.

Daneben sind neuere Veröffentlichungen bekannt, die Lösungen zu oben beschriebenen Anforderungen an heutige autostereoskopische Multi-User-Displays offenbaren.

Im EP 0 881 844 A2 wird ein Einzel-Betrachter-Display mit Lichtquellen-Tracking beschrieben. Dieses Display arbeitet im zeitsequentiellen Modus. Zwei benachbarte Segmente eines Lichtquellen-Paares sind für das linke und rechte Auge des Betrachters bestimmt. Ist beispielsweise ein Segment für ein rechtes Betrachterauge eingeschaltet, so bildet ein erstes Lentikular dieses Segment in einer Vielzahl von Bildern auf die Diffusor-Platte ab. Diese dient nun als sekundäre Lichtquelle, die durch ihre Streueigenschaft über alle Linsen des zweiten Lentikulars das Display mit dem rechten Stereobild durchsetzt, wobei das Licht auf ein rechtes Betrachterauge fokussiert wird.

Im nachfolgenden Moment schaltet das Lichtquellen-Paar auf das Segment für das linke Auge und das Display auf den linken Bildinhalt um. Bewegt sich der Betrachter aus der Stereozone heraus, wird auf das zweite, diesem Bereich zugeordnete Lichtquellen-Paar, und auf rechte oder linke Bildinhalte umgeschaltet.

Nachteilig ist hier die Verwendung der Diffusor-Platte. Sie verhindert prinzipiell einen Multi-User-Betrieb, da die Diffusor-Platte mit ihrer Vielzahl von sekundären Lichtquellen durch das zweite Lentikular periodisch fortgesetzt abgebildet wird.

Die Patentschrift WO 03/019952 A1 (identisch mit US 2003/0039031) beschreibt ein Tracking-basiertes Verfahren für Multi-User mit wahlfreiem Zugriff auf 2D- und 3D-Programme. Bei diesem Verfahren ist neben dem Display eine Richtungs-Optik (directivity optics) vorgesehen, die aus zwei Linsenanordnungen, die ein Shutter einschließen, besteht. Die Richtungsoptik fokussiert den Inhalt des Displays, das gleichzeitig als Lichtquelle dient, auf ein oder mehrere Betrachteraugen. Jede Linse der ersten Linsenanordnung fokussiert je ein Pixel des Displays auf den Shutter, der für einen Betrachter ein Segment je Linsen-Pitch geöffnet hat. Dieses Segment wird durch eine zugehörige Linse einer zweiten Linsenanordnung mit im wesentlichen gleichem Pitch auf das Betrachterauge abgebildet.

Bei Bewegung eines Betrachters übermittelt ein Positionsfinder die neue Position, aus der sich die entsprechenden geöffneten Segmente des Shutters bestimmen, die die Fokussierung der Display-Pixel auf die Augen sichert. Im 3D-Modus werden im Zeitmultiplex-Verfahren nacheinander ein rechtes und linkes Bild dem rechten oder linken Auge angeboten. Bei mehreren Betrachtern sind entsprechend mehrere Segmente aufgeschaltet. Für reinen 2D-Modus können alle Segmente des Shutters aufgeschaltet sein.

Obwohl alle Merkmale an ein autostereoskopisches Display prinzipiell verfügbar sind, ist eine Realisierung als autostereoskopisches Multi-User-Display mit erheblichen Schwierigkeiten verbunden. An den Shutter werden extrem hohe Anforderungen hinsichtlich der Auflösung gestellt. So wird bei einem in der Patentschrift angegebenem Ausführungsbeispiel von 100 Winkelpositionen eine Segment-Breite von 2,5 um erforderlich, wenn man einen Pixel-Pitch von 0,25 mm für übliche UXGA-Displays annimmt. Bei 1600 Spalten wären 160.000 wahlfreie lineare Segmente erforderlich.

Beim Proj ektionsverfahren nach WO 03/013153 A1 sind ebenfalls Informationsträger und Lichtquelle miteinander gekoppelt. Die Bildinformation wird durch Segmente einer schaltbaren, hochauflösenden Barriere so den Elementen einer Ablenkeinheit zugeführt, dass die Bildinformation auf den oder die Betrachter fokussiert wird. Zur Fokussierung des Lichts aus der Projektionseinheit kann noch eine Fresnel-Linse vorgeschaltet sein. Nachteilig ist hier die grosse Tiefe der Anordnung sowie die grosse Intensität für die Proj ektionseinheit.

In den Varianten mit den drei Komponenten kollimierte Backlight-Lichtquelle, Richtungseinheit zur Fokussierung des Lichts auf die Betrachteraugen und Transmissionspanel werden zwar Lichtquelle und Informations-Träger getrennt, allerdings auf Kosten eines aufwendigen Backlights mit gerichtetem Licht, entweder von einem Laser oder einer punktförmigen Lichtquelle. Für die eigentliche Fokussierung auf die Betrachteraugen wird nach wie vor die erwähnte Richtungsoptik zusätzlich benötigt.

Das Backlight mit diffusen Lichtquellen, dessen Licht mit einer Linse gerichtet wird, erfordert wegen der grossen Brennweite zur Vermeidung von Aberrationen eine grosse Bautiefe des Gerätes.

Zur genauen Fokussierung des Lichts auf die Betrachteraugen nicht nur in lateraler Richtung, sondern auch für verschiedene Abstände der Betrachter vom Display wird in WO 03/053072 A1 ein dreidimensionales Backlight offenbart. Es wird in verschiedenen Konfigurationen, wie z.B. hintereinander angeordnete LCDs und spiegelnde adressierbare Flächen beschrieben. Diese im 3D-Backlight adressierbaren Lichtquellen durchsetzen eine Linse als Abbildungssystem, das die Lichtquellen auf einen oder mehrere Betrachter abbildet und der Bewegung nachführt, ähnlich dem Verfahren mit einer ebenen Lichtquelle von Dodgson (siehe oben). Dabei durchläuft das Licht auf seinem Weg zu den Betrachtern einen Lichtmodulator, der im alternierenden Modus aus einem oder mehreren 3D-Programrnen das jeweils linke Bild für die linken und das rechte Bild für die rechten Betrachteraugen anbietet.

Nachteilig an diesem Verfahren ist die grosse Tiefe des autostereoskopischen Displays, die durch das dreidimensionale Backlight und die Abbildungslinse mit extrem grossem Durchmesser entsteht. Um die Aberrationen derartiger grossformatiger Linsen im ausseraxialen Bereich zu begrenzen, muss die Brennweite und damit die Gerätetiefe hinreichend gross gewählt werden. Ausserdem ist das dreidimensionale Backlight schwierig herzustellen.

Ein Lichtquellen-Tracking ist in EP 0 656 555 A vorgestellt. Hier werden zwei zueinander senkrecht stehende Displays im Durchlicht betrieben, zwischen denen sich ein im Winkel von 45 geneigter halbdurchlässiger Spiegel befindet. Durch jedes der beiden Panel wird je eine Lichtquelle auf das linke und rechte Auge des Betrachters über eine fokussierende Optik abgebildet, für das eine Auge durch den halbdurchlässigen Spiegel hindurch, für das andere Auge vom halbdurchlässigen Spiegel abgelenkt. Ein Panel enthält die Bildinformation für das rechte Auge, das andere Panel die Bildinformation für das linke Auge.

Bewegt sich der Betrachter, werden über einen Positionsfinder die Position bestimmt und die Lichtquellen so nachgeführt, dass der Betrachter stets ein Stereobild sieht. Bei mehreren Betrachtern sind entsprechend mehrere Lichtquellen eingeschaltet. Die beiden Panel enthalten gleichzeitig rechtes und linkes Bild.

Unter Auslassung des Single-User-Patents EP 0 881 844 A2 sowie der reinen 3D-Multi-View-Displays ist festzustellen, dass der beschriebene Stand der Technik in den meisten Fällen durch Displays in der Doppelfunktion als Informationsträger und Lichtquelle zugleich (WO 03/019952, N.A.Dodgson et al.), charakterisiert ist. Außerdem zeigt sich, dass alle nachfolgenden optischen Einheiten auf den Pixel-Pitch des Displays abgestimmt sind. Beide displaygebundenen Besonderheiten weisen als Konsequenz zusammenfassend folgende Nachteile auf:

Erstens sind die Komponenten für unterschiedliche Displays nicht austauschbar. Displays selbst mit Abweichungen in der Geometrie, wie Auflösung oder Grösse, erfordern ein neues Design. Insbesondere sind neue Shutter erforderlich. Zweitens verlangt die Justage auf Basis der Display-Pixel eine extrem hohe Genauigkeit und hohe Anforderungen an die Robustheit.

Drittens sind nur Displays einsetzbar, die eine hinreichend große Helligkeit haben. Viertens sind die Ausdehnungen der Segmente der Shutter durch Bezug auf den Pixel-Pitch so klein zu halten, dass eine Realisierung sehr schwierig und teuer ist.

Bei den Displays nach WO 03/053072 A1, EP 0 656 555 A und WO 03/013253 A1 ist weiterhin nachteilig, daß sie aus verschiedenen, oben angeführten Gründen eine größere Tiefenausdehnung besitzen, die keine flache Bauweise für ein autostereoskopisches Multi-User-Display zuläßt.

Mit der vorliegenden Erfindung soll ein autostereoskopisches Multi-User-Display geschaffen werden, das sich durch möglichst minimalen Aufwand an einzelnen Komponenten und deren Justage zueinander, durch flache Bauweise, durch Austauschbarkeit von 3D-Komponenten und Displays und eine große Helligkeit auszeichnet und es gestattet, die insgesamt extrem hohen Genauigkeitsforderungen des Standes der Technik zu verringern.

Insbesondere soll weiterhin aufgabengemäß eine Trennung von Beleuchtungselementen und informationstragender Bild-Matrix bei einem autostereoskopischen Multi-User-Display erreicht werden, das hochaufgelöste 2D- und 3D-Darstellungen gleichzeitig oder/und umschaltbar darbietet und es mehreren Betrachtern erlaubt, die dargebotenen Inhalte auch bei Positionswechsel unabhängig voneinander anzuschauen.

Diese Aufgabe wird mit den im Patentanspruch 1 aufgeführten Merkmalen gelöst. Dabei ist erfindungsgemäss vorgesehen, dass das autostereoskopische Multi-User-Display ein Fokussierungselement enthält, das als eine Sweet-Spot-Einheit ausgeführt ist und das Licht mit einer individuell vorgebbaren Ausdehnung als Sweet-Spot auf Orte fokussiert, die den Augen von Betrachtern entsprechen. Dies wird erreicht durch die in Lichtrichtung aufeinanderfolgende Anordnung der Komponenten Sweet-Spot-Einheit und Bild-Matrix, wobei das Licht der Sweet-Spot-Einheit die Bild-Matrix möglichst homogen durchsetzt. Ein Sweet-Spot hat eine laterale Ausdehnung, deren Größe den Abstand der Betrachteraugen erreicht oder überschreiten kann. Vorteilhafterweise verringert die Sweet-Spot-Grösse die ansonsten hohen Anforderungen an die Tracking-Genauigkeit. Das Licht braucht nicht auf die Augenpupillen fokussiert zu werden, es genügt, dass es mit Sweet-Spot-Genauigkeit positioniert wird. Für Augen, die keine Information empfangen, wird der Sweet-Spot abgeschaltet. Er wird zum Dark-Spot.

Die Sweet-Spot-Einheit ist mit der Bild-Matrix so synchronisiert, dass bei mehreren Betrachtern ein linkes oder rechtes Stereobild aus einer Anzahl vorliegender Programme oder eine reine 2D-Darstellung ausgewählt werden können.

Die Sweet-Spot-Einheit besteht in erfindungsgemäßer Ausbildung aus einer Beleuchtungs-Matrix und einer Abbildungs-Matrix. Die Beleuchtungs-Matrix befindet sich etwa in der vorderen Brennweite der Linsenelemente der Abbildungs-Matrix und kann vorteilhafterweise aus einem üblichen Backlight und einem elektronischen Shutter mit wahlfrei ansteuerbaren Öffnungen bestehen, der beispielsweise ein LCD oder ein Ferroelektrisches LCD (FLCD) sein kann.

Die Synchronisation zwischen Shutter und Bild-Matrix wird erfindungsgemäss erheblich erleichtert, wenn baugleiche LCD verwendet werden, wobei der Shutter und die Bild-Matrix in ihrer Pixel- und Subpixel-Geometrie identisch sind. Der Shutter enthält keine Farbmatrix, die das informationstragende LCD im Falle einer Farbdarstellung aufweist. Es kann in seinen Subpixeln angesteuert werden, wodurch sich die Anzahl der ansteuerbaren Positionen verdreifacht.

Die Öffnungen des Shutters können in ihrer Größe variieren, beispielsweise durch Aneinanderreihung benachbarter Subpixel. Durch die erfindungsgemäße Trennung der einzelnen Komponenten ist es möglich, die Anforderungen an die Shutterauflösung zu reduzieren. Die Beleuchtungs-Matrix kann erfindungsgemäss auch aus nur einer Komponente als aktiv leuchtende Beleuchtungs-Matrix mit wahlfrei ansteuerbaren linien- oder matrixförmig angeordneten Strukturen bestehen. Beispiele sind Organische LED (OLED) oder Projektionseinheiten auf DLP-Basis. Dabei kann im Sinne der Erfindung zwischen Projektor und Abbildungs-Matrix eine Fresnel-Linse oder/und eine streuende Schicht angeordnet sein.

Die Abbildungs-Matrix hat die Aufgabe, die eingeschalteten Elemente der Beleuchtungs-Matrix in den Raum vor dem Display in Sweet-Spots abzubilden. Sie kann in verschiedenen Ausführungen, ganz oder teilweise als Lentikular, Doppellentikular, matrixförmige Anordnung von Linsen, zusammengesetztes Linsensystem oder holografisches optisches Element ausgebildet sein.

Schliesslich können erfindungsgemäss Lentikulare, Linsen-Matrizen und holografische optische Elemente hintereinander, auch kombiniert, angeordnet sein.

Zur Unterdrückung von Aberrationen können die Elemente der Abbildungs-Matrix auch als Doublet, Triplet oder weitere hintereinanderliegende Linsensysteme ausgebildet sein, ähnlich den optischen Systemen, die aus Optiken mit nur einem Strahlengang bekannt sind. Die Abbildungsmatrix kann erfindungsgemäss auch teilweise oder ganz aus Material gefertigt sein, das in seinen optischen Eigenschaften steuerbar ist, beispielsweise aus Polymer.

Zur Verhinderung von Moire'-Effekten ist vorgesehen, vor oder hinter der Bild-Matrix ein streuendes Medium, etwa eine Streufolie, anzuordnen.

Wenn in der Erfindungsbeschreibung an verschiedenen Stellen von einem Betrachter gesprochen wird, dann repräsentiert dieser eine Betrachter selbstverständlich auch eine Betrachtergruppe.

Das erfindungsgemäße autostereoskopische Multi-User-Display ist in Ausführungsbeispielen dargestellt und wird im folgenden näher beschrieben. In den dazugehörigen Zeichnungen zeigen
- Fig. 1: eine prinzipielle Darstellung des autostereoskopischen Multi-User-Displays, bestehend aus Sweet-Spot-Einheit und Bild-Matrix, für das rechte Auge eines Betrachters
- Fig. 2: eine schematische Darstellung der Bildinformation entsprechend Fig. für das linke Auge
- Fig. 3: eine schematische Darstellung einer Schaltung der Beleuchtungs-Matrix zur Erzeugung eines Sweet-Spots für ein Betrachterauge
- Fig. 4: eine schematische Darstellung einer Schaltung der Beleuchtungs-Matrix entsprechend Fig. 3 zur Erzeugung eines vergrößerten Sweet-Spots
- Fig. 5: eine schematische Darstellung der Erzeugung von Sweet-Spots für zwei Betrachter, denen 3D-Bildinhalte angeboten werden
- Fig. 6: eine schematische Darstellung eines 2D-Bildinhalts für einen grösseren Raumbereich und mehrere Betrachter
- Fig. 7: eine schematische Darstellung entsprechend Fig. 6, wobei für einen Betrachter eine Information und für den anderen ein Dark-Spot geschaltet ist
- Fig. 8: eine schematische Darstellung einer Ausführungsform der Sweet-Spot-Einheit unter Verwendung einer Projektionsanordnung als Beleuchtungs-Matrix

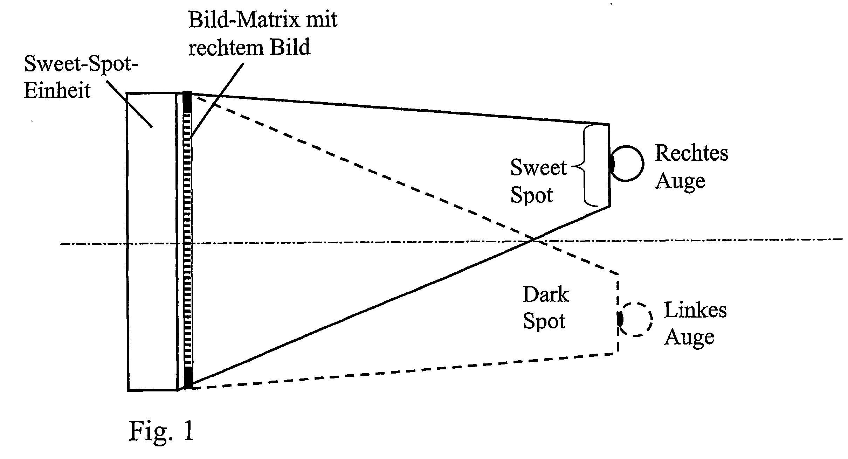

Das autostereoskopische Multi-User-Display entsprechend den Figuren 1 bis 8 basiert im Stereo-Modus auf Tracking mittels einer Sweet-Spot-Einheit. Die Stereoinformation wird den Betrachtern in aufeinanderfolgenden Frames, also zeitsequentiell, dargestellt. Diese Darstellung der Stereoinformation wird auch in der sogenannten Shuttertechnik bzw. unter Benutzung von Polarisationsbrillen verwendet und ist weit verbreitet. Durch Anwendung dieser Technik bei autostereoskopischen Multi-User-Displays bleibt die Auflösung erhalten und wird nicht, wie beim Multi-View-Verfahren, um einen Faktor, der der Anzahl der Ansichten entspricht, reduziert. Die Auflösung ist gleich der Auflösung der Bild-Matrix.

Fig. 1 zeigt den prinzipiellen Aufbau des erfindungsgemässen autostereoskopischen Multi-User-Displays im 3D-Modus für einen Betrachter, das aus einer Sweet-Spot-Einheit und einer informationstragenden Bild-Matrix besteht. Beide Komponenten sind im Gegensatz zu den bekannten flachen Multi-User-Displays voneinander getrennt. Die Hauptkomponenten sind in Lichtrichtung wie folgt angeordnet: Sweet-Spot-Einheit und Bild-Matrix.

Die funktionell von der Bild-Matrix getrennte Sweet-Spot-Einheit fokussiert das Licht auf ein oder mehrere ausgewählte Betrachteraugen, hier beispielsweise auf das rechte Auge eines Betrachters. Die Fokussierung erfolgt nicht punkt- oder linienförmig, sondern entspricht der Sweet-Spot-Ausdehnung, die lateral den Augenabstand eines Betrachters erreichen und überschreiten kann. Dadurch kann ein Betrachter noch ohne Störungen stereoskopisch sehen, auch wenn er sich einige Zentimeter bewegt, ohne dass ein Tracking einsetzt. Die Anforderungen an das Tracking können somit drastisch reduziert und die Robustheit des Displays verbessert werden. Das Licht durchsetzt auf seinem Weg zum Betrachter die Bild-Matrix, die es mit einer Information moduliert. Hier in Fig. 1 enthält die Bild-Matrix in diesem Augenblick das Stereo-Bild für das rechte Auge eines Betrachters. Das Auge kann sich innerhalb des Sweet-Spots bewegen, wobei die Bild-Matrix stets und ohne Einschränkungen sichtbar bleibt. Für das linke Auge ist der Sweet-Spot zum Zeitpunkt der Abbildung dunkel geschaltet. Er wird im weiteren als Dark-Spot bezeichnet.

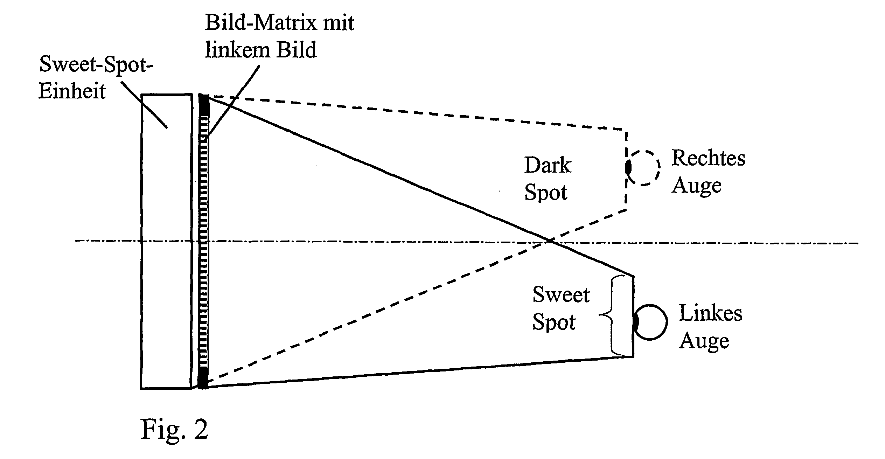

Fig. 2 zeigt die nachfolgende Fokussierung durch die Sweet-Spot-Einheit auf das linke Auge.

Auf seinem Weg zum Sweet-Spot für das linke Auge moduliert die Bildmatrix das informationslose Sweet-Spot-Bündel jetzt mit dem linken Stereobild. Der Sweet-Spot für das rechte Auge ist jetzt zum Dark-Spot abgeschaltet. Synchron mit dem Umschalten von Sweet-Spot auf Dark-Spot und umgekehrt wird die entsprechende Bildinformation zwischen linkem und rechtem Stereobild gewechselt. Erfolgt die Darbietung der Bildinformationen der Bild-Matrix für rechtes und linkes Auge mit der synchronisierten Fokussierung auf das rechte und linke Auge hinreichend schnell, können die Augen die ihnen dargebotenen Bildinformationen zeitlich nicht mehr auflösen. Rechtes und linkes Auge sehen ohne Übersprechen die Bildinformationen in stereo.

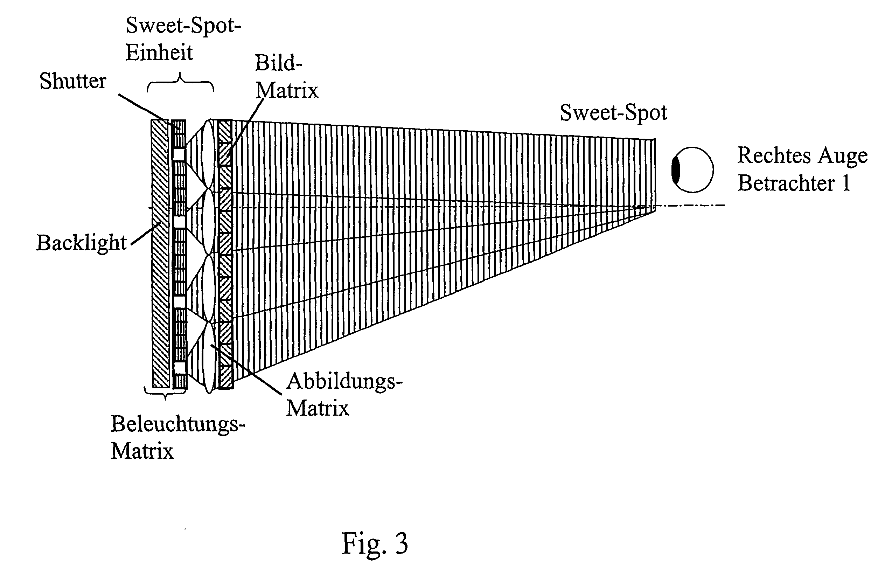

Die schematische Darstellung einer Schaltung der Beleuchtungs-Matrix zur Erzeugung eines Sweet-Spots für ein Betrachterauge ist in Fig. 3 zu sehen. Eine detailliertere Gestaltung der Beleuchtungs-Matrix ist ebenfalls dargestellt. Die Sweet-Spot-Einheit besteht aus der Beleuchtungs-Matrix und der Abbildungs-Matrix. Die Beleuchtungs-Matrix wird im Ausführungsbeispiel durch ein Backlight und einen Shutter realisiert. Er kann ein auf der Basis von Lichtventilen wirkendes Bauelement, vorzugsweise ein LCD oder ein FLCD, sein. Die Abbildungs-Matrix besteht im Beispiel aus einem Lentikular, dessen Brennebene etwa in der Ebene der Beleuchtungs-Matrix liegt. Wird eine kleine Öffnung in der Beleuchtungs-Matrix geöffnet, so wird jeder Punkt in der Öffnung zu einem Parallel-Strahlbündel, das die entsprechende Linse der Abbildungs-Matrix hier in Richtung rechtes Auge eines Betrachters verlässt. Die gesamte Öffnung erzeugt auf diese Weise beim Betrachter den ausgedehnten Sweet-Spot.

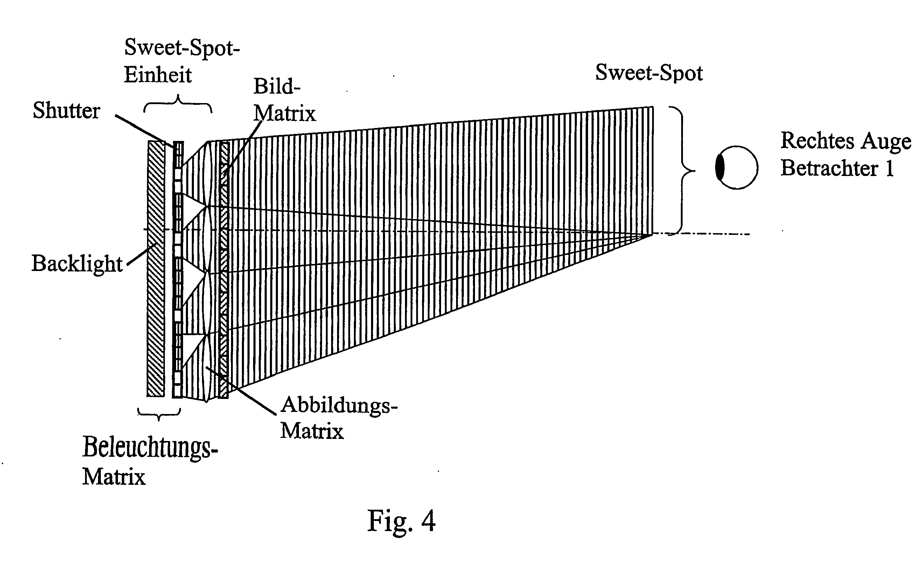

Fig. 4 veranschaulicht anhand einer Schaltung der Beleuchtungs-Matrix, wie mit Hilfe der Sweet-Spot-Einheit die Ausdehnung des Sweet-Spots vergrössert wird. Dazu werden entsprechend mehr Öffnungen in der Beleuchtungsmatrix, hier einem Shutter, aufgeschaltet. Das Betrachterauge kann sich innerhalb des vergrösserten Sweet-Spots bewegen, ohne den Blick auf die gesamte Ausdehnung des Displays zu verlieren. Die Öffnungen im Shutter sind in ihrer Grösse und Transmission wahlfrei steuerbar.

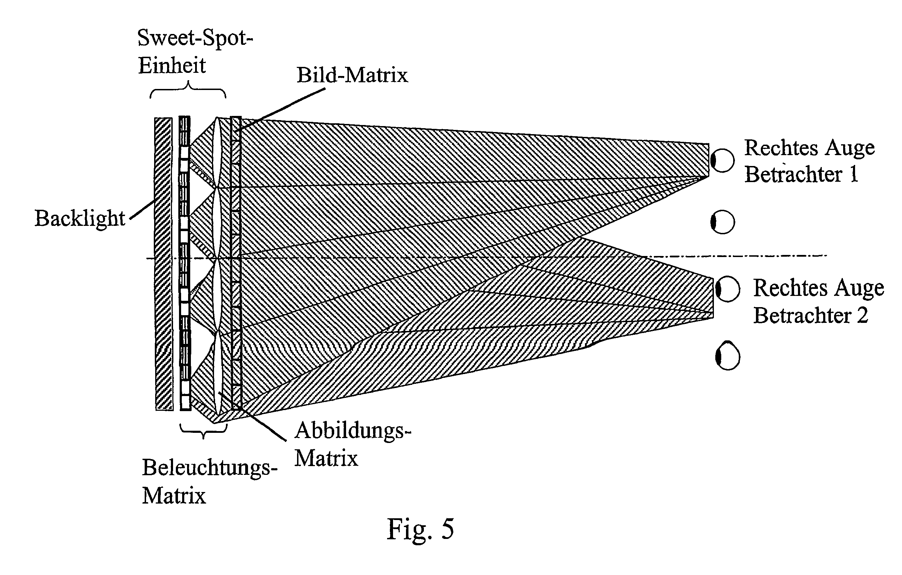

Am Beispiel von zwei Betrachtern ist in Fig. 5 die Zuordnung mehrerer Betrachter für eine Szene im 3D-Modus dargestellt. Das Display enthält das rechte Stereobild für die zwei Betrachter. Gleichzeitig mit der Informationsdarbietung werden Sweet-Spots für die rechten Augen beider Betrachter erzeugt. Im nächstfolgenden Augenblick nimmt die Bildmatrix das linke Stereobild auf und die Sweet-Spots werden auf die linken Augen der Betrachter gerichtet. Eine Zuordnung von verschiedenen Bildinhalten und den entsprechenden Sweet-Spots für Betrachter einer reinen 2D-Darstellung, ebenso für eine wahlfreie Zuordnung von Betrachtern, die verschiedene Inhalte, z.B. unterschiedliche Programme sehen möchten, oder zum wahlfreien Zugriff auf den 2D-Modus aus 3D-Inhalten, erfolgt analog auf die gleiche Weise.

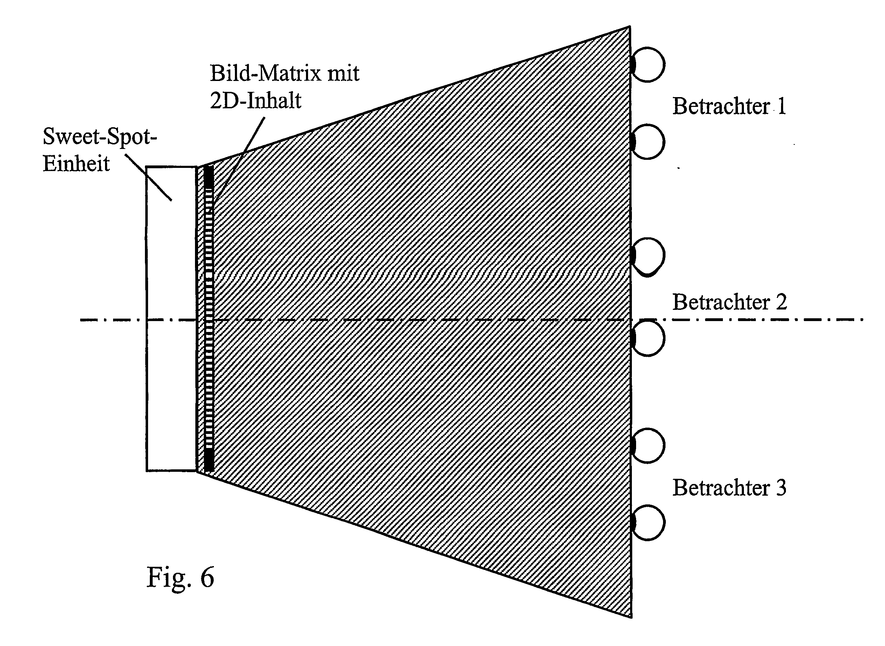

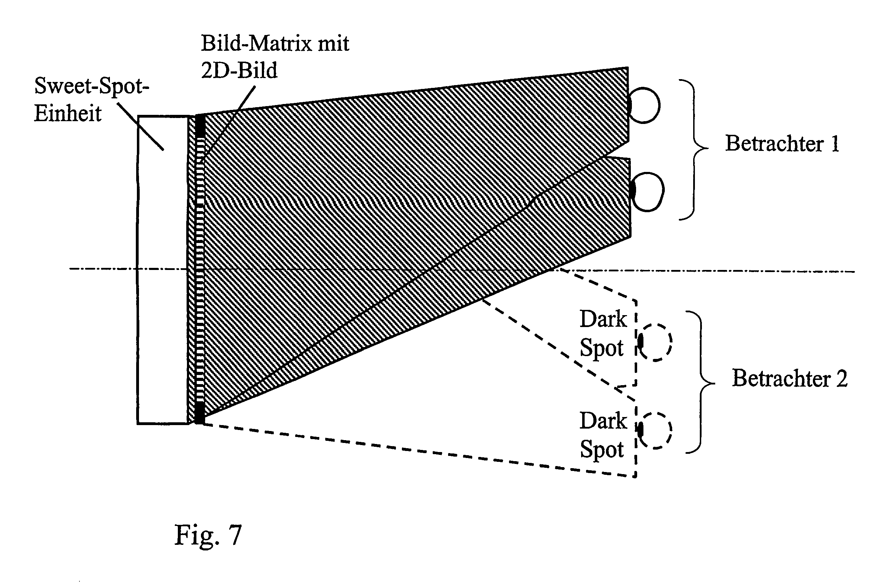

Eine völlige Umschaltung des autostereoskopischen Displays auf einen reinen 2D-Modus lässt sich entsprechend Fig. 6 dadurch erreichen, dass der Shutter transparent geschaltet wird. Damit wird ein größerer Bereich im Betrachterraum gleichmäßig hell ausgeleuchtet. Soll für einen Betrachter Information vorenthalten werden, genügt es, die entsprechenden Sweet-Spots zu Dark-Spots umzuschalten. In Fig.7 ist dies für 2D-Information gezeigt. Der Betrachter 1 hat Einblick auf die Information, z.B. ein Bankangestellter, während für Betrachter 2, vielleicht ein Kunde, der Bildschirm dunkel bleibt.

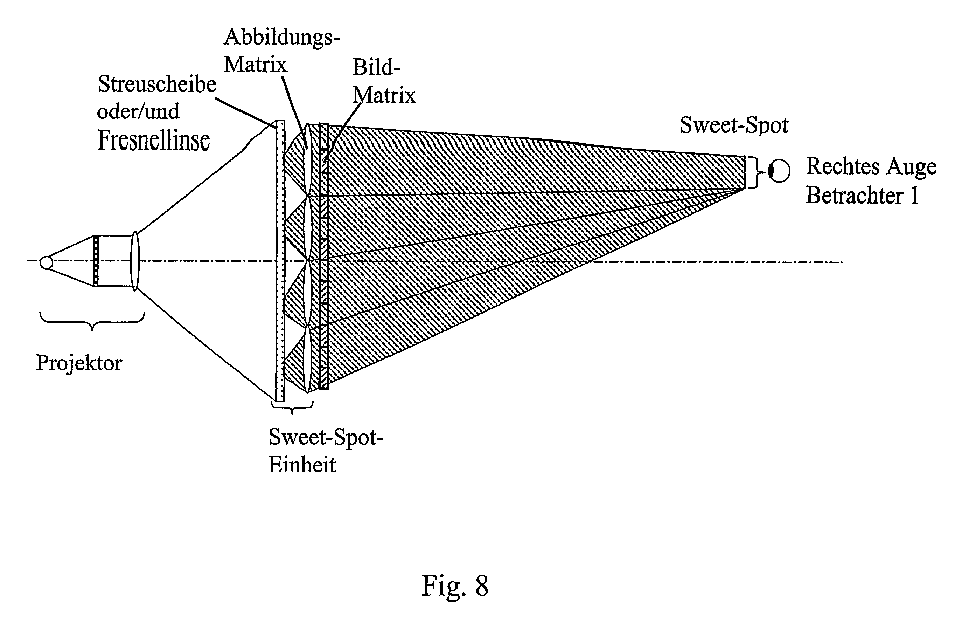

In Fig. 8 ist für einen Betrachter statt des aktiven Shutters ein Projektionssystem vorgesehen, das beispielsweise auf DLP-Basis ausgeführt sein kann. Das Projektionssystem dient nur als Beleuchtungs-Einheit und ersetzt Backlight und Shutter aus den vorangegangenen Figuren. Über die Abbildungs-Matrix werden wieder die Sweet-Spots projiziert, wobei das Licht durch die Bild-Matrix mit der Bild-Information moduliert wird. Die projizierten Bildinhalte werden wie schon beschrieben in den Betrachterraum in Sweet-Spots abgebildet.

Erfindungsgemäss ist es möglich, eine Streuscheibe oder/und eine Fresnel-Linse der Abbildungs-Matrix vorzuordnen, die das Licht auf die Abbildungs-Matrix lenkt.

Die Abbildungs-Matrix der Fokussierungs-Einheit wird in den Figuren 1 bis 8 durch Lentikulare dargestellt. Ordnet man jedem Lentikular Öffnungen aus der dahinter liegenden Beleuchtungs-Matrix zu, so erhält man die Anzahl von Positionen, die im Raum prinzipiell wahlfrei angesteuert werden können. Die Anzahl der Öffnungen im Shutter ist mindestens gleich der Anzahl der Linsen, wenn die Bild-Matrix vollständig eingesehen werden soll. Voraussetzung für eine homogene Ausleuchtung der Bild-Matrix ist, dass die Aberrationen der Abbildungs-Matrix dies zulassen. Für ein Lentikular beispielsweise ist der überstreichbare Winkel wegen der auftretenden Aberrationen relativ klein, etwa 0,1 rad. Anstelle von Einzel-Lentikularen kann man zur Unterdrückung der Aberrationen auch Doppel-Lentikulare einsetzen. Es liegt im Rahmen der Erfindung, daß die Ausführungsformen der Lentikularen unterschiedlich sein können. Beide Linsenseiten der Lentikulare zeigen beispielsweise in eine Richtung oder sind einander zugewandt oder entgegengesetzt nach außen angeordnet. Anstelle von Lentikularen können auch Linsen-Matrizen verwendet werden.

Anhand der dargelegten Ausführungsbeispiele werden die vielseitigen Einsatzmöglichkeiten des autostereoskopischen Multi-User-Displays deutlich.

Von der Erfindung erfasst werden selbstverständlich auch Anwendungsmöglichkeiten, die hier nicht aufgeführt sind, aber denen das erfindungsgemäße Prinzip zugrunde liegt.

Das beschriebene autostereoskopische Display zeichnet sich insgesamt durch die Verwendbarkeit im 2D- und 3D-Modus, Multi-User-Fähigkeit, freie Betrachterbeweglichkeit, Echtzeitfähigkeit, hohe Auflösung, große Helligkeit und geringe Bautiefe aus. Es ist robust und benötigt keine mechanisch beweglichen Teile. Wegen seiner hohen Qualitätsmerkmale bezüglich der Darstellung ist es für den High-End-Einsatz in den Bereichen Medizin, Technik, Forschung und Entwicklung, für den Mid-Range-Bereich als Video-Konferenz-Systeme und in der Werbung und im Low-end-Bereich als Home-Display, für Handheld-Computer und für Videophones und für viele andere Anwendungen geeignet.

## Patentansprüche

1. Autostereoskopisches Multi-User-Display, das eine Beleuchtungs- und eine Abbildungsmatrix zum Erzeugen einer weissen, möglichst homogenen Lichtverteilung auf einer transmissiven Bild-Matrix enthält, die mit einer Vielzahl steuerbarer Pixel zur zeitsequentiellen Darstellung von zweidimensionalen Bildern oder Bildfolgen mit monoskopischen oder stereoskopischen Bildinhalten versehen ist und von der Lichtverteilung großflächig durchsetzt wird, wobei ein Bildinhalt des Bild-Information für jeweils ein Auge eines Betrachters entspricht, wobei die Abbildungsmatrix eine Vielzahl von Linsenelementen und die Beleuchtungsmatrix eine Vielzahl von Beleuchtungselementen aufweist und die Beleuchtungsmatrix annähernd in der Ebene der Brennweite der Linsenelemente der Abbildungsmatrix liegt, um Licht in annähernd parallelen Strahlenbündeln synchronisiert mit den Bild-Informationen für das jeweilige Auge als Sweet-Spot auf das entsprechende Auge des Betrachters zu fokussieren, **dadurch gekennzeichnet, dass**
- die Beleuchtungsmatrix und die Abbildungsmatrix eine Sweet-Spot-Einheit zum Erzeugen der Sweet-Spots bilden, bei der
- mehrere Beleuchtungselemente, deren Anzahl und Lage bezüglich des zugehörigen Linsenelementes von den ermittelten Positionen von Betrachteraugen abhängt, aufgeschaltet sind, und die von jedem Linsenelement ausgehenden parallelen Strahlenbündel in jeweiligen Sweet-Spos für die entsprechenden Betrachter vereint sind,
- bei einer Änderung der Position der Augen wenigstens eines Betrachters eine Änderung der Beleuchtungselemente-Aufschaltung erfolgt, um ein Nachführen der diesen Betrachteraugen zugeordneten Sweet-Spots durchzuführen und
- in Zeilenrichtung jedem Linsenelement mindestens fünf Beleuchtungselemente zugeordnet sind.

2. Autostereoskopisches Multi-User-Display nach Anspruch 1, **dadurch gekennzeichnet, dass** die Beleuchtungs-Matrix aus einem Backlight und einem elektronischen Shutter mit wahlfrei in Ort und Transmission ansteuerbaren Öffnungen besteht.

3. Autostereoskopisches Multi-User-Display nach Anspruch 2, **dadurch gekennzeichnet, dass** die Bild-Matrix und der Shutter in der Geometrie der Pixel und Subpixel identisch sind.

4. Autostereoskopisches Multi-User-Display nach Anspruch 1, **dadurch gekennzeichnet, dass** die Sweet-Spots in Anzahl, Ausdehnung und räumlicher Zuordnung durch Aufschalten benachbarter Beleuchtungselemente in der Sweet-Spot-Einheit wahlfrei steuerbar sind.

5. Autostereoskopisches Multi-User-Display nach Anspruch 4, **dadurch gekennzeichnet, dass** die vorgegebene Ausdehnung der Sweet-Spots dem Augenabstand des jeweiligen Betrachters entspricht oder größer ist.

6. Autostereoskopisches Multi-User-Display nach Anspruch 1, **dadurch gekennzeichnet, dass** Beleuchtungselemente für die Sweet-Spots für den zweiten und weitere Betrachter lichtundurchlässig geschaltet sind, während für den ersten und weitere Betrachter die ihnen zugeordneten Informationen sichtbar sind oder. Beleuchtungselemente für die Sweet-Spots für den ersten und weitere Betrachter lichtundurchlässig geschaltet sind, während für den zweiten und weitere Betrachter die ihnen zugeordneten Informationen sichtbar sind.

7. Autostereoskopisches Multi-User-Display nach Anspruch 1, **dadurch gekennzeichnet, dass** die Beleuchtungs-Matrix ein aktiv leuchtendes Bauelement mit wahlfrei in Ort und Intensität ansteuerbaren linien- oder matrixförmig angeordneten Strukturen ist.

8. Autostereoskopisches Multi-User-Display nach Anspruch 1, **dadurch gekennzeichnet, dass** die Beleuchtungs-Matrix aus einer Projektionseinheit mit einer in Lichtrichtung vor der Abbildungs-Matrix angeordneten streuenden Schicht oder/und einer Fresnel-Linse besteht.

9. Autostereoskopisches Multi-User-Display nach Anspruch 1, **dadurch gekennzeichnet, dass** die Abbildungs-Matrix ganz oder teilweise aus PolymerMaterial besteht, das in seinen optischen Eigenschaften steuerbar ist.

## Claims

1. Autostereoscopic multi-user display, comprising an illumination matrix and a projection matrix for the generation of a white light distribution which is as homogeneous as possible on a transmissive image matrix which contains a multitude of controllable pixels for the time sequential representation of two-dimensional images or image sequences with monoscopic and stereoscopic image contents, where a large area of said image matrix is permeated by said light distribution, where one image content corresponds to the image information intended for one eye of an observer, where said projection matrix comprises a multitude of lens elements and where said illumination matrix contains a multitude of illumination elements, and where the illumination matrix is disposed about in the focal plane of the lens elements of the projection matrix, so that light in the form of pencils of almost parallel rays is focussed on to the respective observer eye as sweet spots synchronized with the image information for the respective eye, **characterised in that**
- the illumination matrix and the projection matrix form a sweet spot unit for the generation of the sweet spots,
- where multiple illumination elements, whose number and position in relation to the corresponding tens element depend on the detected positions of observer eyes, are switched on, and that the pencils of parallel rays which are emanated from each lens element become united in respective sweet spots for the respective observers,
- where if the eye positions of at least one observer change the combination of activated illumination elements will be modified in order to track the sweet spots to the changed positions of those eyes,and
- where at least five illumination elements in one line are assigned to each lens element.

2. Autostereoscopic multi-user display according to claim 1, **characterised in that** the illumination matrix comprises a backlight and an electronic shutter with apertures, whose location and transmittance are freely controllable.

3. Autostereoscopic multi-user display according to claim 2, **characterised in that** the image matrix and the shutter have the same pixel and sub-pixel geometry.

4. Autostereoscopic multi-user display according to claim 1, **characterised in that** the number, extent and spatial assignment of sweet spots can be controlled freely by switching adjacent illumination elements in the sweet spot unit.

5. Autostereoscopic multi-user display according to claim 4, **characterised in that** the defined extent of the sweet spots is equal to or greater than the eye separation of the respective observer.

6. Autostereoscopic multi-user display according to claim 1, **characterised in that** illumination elements for the sweet spots for the second and further observers are switched to a dark state while the first and further observers are provided with information intended for them, or that illumination elements for the sweet spots for the first and further observers are switched to a dark state while the second and further observers are provided with information intended for them.

7. Autostereoscopic multi-user display according to claim 1, **characterised in that** in the illumination matrix is an actively light-emitting element which has a linear or matrix structure, location and intensity of said structure being freely controllable.

8. Autostereoscopic multi-user display according to claim 1, **characterised in that** the illumination matrix comprises a projection unit including a diffusing layer and/or Fresnel lens disposed in front of the projection matrix, seen in the direction of light propagation.

9. Autostereoscopic multi-user display according to claim 1, **characterised in that** the projection matrix is wholly or partly made of a polymer material whose optical properties are controllable.

## Revendications

1. Ecran multi-utilisateurs autostéroscopique qui contient une matrice d'éclairage et de reproduction d'image destinée à produire une diffusion de la lumière blanche, la plus homogène possible sur une matrice d'image transmissive, qui est munie d'une pluralité de pixels réglables pour la représentation par séquences de temps d'images en deux dimensions ou de suites d'images avec des contenus d'image monoscopiques ou stéréoscopiques et qui est chargée par la diffusion de la lumière sur une grande surface, dans lequel un contenu d'image correspond aux informations relatives à l'image pour respectivement l'oeil d'un observateur, dans lequel la matrice de reproduction d'image présente une pluralité d'éléments de lentilles et la matrice d'éclairage présente une pluralité d'éléments d'éclairage et la matrice d'éclairage se trouve approximativement au niveau de la distance focale des éléments de lentilles de la matrice de reproduction d'image, pour mettre au point de la lumière dans des faisceaux lumineux approximativement parallèles en synchronisation avec les informations relatives à l'image pour l'oeil respectif comme « point de vision idéal » (sweet-spot) sur l'oeil correspondant de l'observateur, **caractérisé en ce que**
- la matrice d'éclairage et la matrice de reproduction d'image forment une unité de points de vision idéaux destinée à produire les points de vision idéaux, dans le cadre desquels
- plusieurs éléments d'éclairage, dont le nombre et la situation par rapport aux éléments de lentilles associés dépendent des positions communiquées par les yeux des observateurs, sont raccordés et qui sont réunis par des faisceaux lumineux parallèles sortant de chaque élément de lentille dans les points de vision idéaux respectifs pour les observateurs correspondantes.
- dans le cas d'une modification de la position des yeux d'au moins un observateur, il se produit une modification du raccordement des éléments d'éclairage pour réaliser une suite de ces points de vision idéaux attribués aux yeux de l'observateur et
- dans le sens horizontal au moins cinq éléments d'éclairage sont attribués à chaque élément de lentille.

2. Ecran multi-utilisateurs autostéréoscopique selon la revendication 1, **caractérisé en ce que** la matrice d'éclairage se compose d'un rétro-éclairage (Backlight) et d'un obturateur (Shutter) électronique avec des ouvertures réglables librement en lieu et transmission.

3. Ecran multi-utilisatewrs autostéréoscopique selon la revendication 2, **caractérisé en ce que** la matrice d'image et l'obturateur sont identiques au niveau de la géométrie des pixels et des sous-pixels.

4. Ecran multi-utilisateurs autostéréoscopique selon la revendication 1, **caractérisé en ce que** les points de vision idéaux sont réglables librement en nombre, étendue et attribution dans l'espace par raccordement d'éléments d'éclairage adjacents dans l'unité de points de vision idéaux.

5. Ecran multi-utilisateurs autostéréoscopique selon la revendication 4, **caractérisé en ce que** l'étendue prescrite des points de vision idéaux correspond à l'intervalle optique de chaque observateur ou lui est supérieur.

6. Ecran multi-utilisateurs autostéréoscopique selon la revendication 1, **caractérisé en ce que** les éléments d'éclairage pour des points de vision idéaux pour le deuxième observateur et d'autres sont raccordés de manière opaque, tandis que pour le premier observateur et d'autres, les informations qui leur sont attribuées sont visibles ou des éléments d'éclairage pour les points de vision idéaux pour le premier observateur et d'autres sont raccordés de manière opaque, tandis que pour le deuxième observateur et d'autres, les informations qui leur sont attribuées sont visibles.

7. Ecran multi-utilisateurs autostéréoscopique selon la revendication 1, **caractérisé en ce que** la matrice d'éclairage est un composant lumineux actif avec des structures en forme de lignes ou de matrices disposées de manière réglable librement en lieu et intensité.

8. Ecran multi-utilisateurs autostéréoscopique selon la revendication 1, **caractérisé en ce que** la matrice d'éclairage se compose d'une unité de projection avec une couche de dispersion et/ou une lentille de Fresnel disposée dans le sens de la lumière devant la matrice de reproduction d'image.

9. Ecran multi-utilisateurs autostéréoscopique selon la revendication 1, **caractérisé en ce que** la matrice de reproduction d'image se compose totalement ou partiellement de matériau polymère qui est réglable au niveau de ses propriétés optiques.
